# FASCICULE DE BREVET EUROPEEN

(11) **EP 1 815 174 B1**
(45) Date de publication et mention de la délivrance du brevet: **03.08.2011**
(21) Numéro de dépôt: 05814949.3
(22) Date de dépôt: 07.11.2005
(51) Int. Cl.: F16K 31/06, F02M 25/08

(54) **VANNE INCORPORANT UN MOYEN D'EQUILIBRAGE DES PRESSIONS DE PART ET D'AUTRE DU CLAPET.**
EIN MITTEL ZUM DRUCKAUSGLEICH AUF BEIDEN SEITEN DES VENTILS UMFASSENDES VENTILSYSTEM
VALVE SYSTEM COMPRISING A MEANS FOR BALANCING PRESSURE ON EITHER SIDE OF THE VALVE

(30) Priorité: 09.11.2004 FR 0411911
(43) Date de publication de la demande: 08.08.2007
(73) Titulaire: Valeo Systèmes de Contrôle Moteur, 95520 Osny (FR)
(72) Inventeur: VAZ DE AZEVEDO, José, F-63320 Saint-Vincent (FR)
(74) Mandataire: Rolland, Jean-Christophe
(86) Numéro de dépôt international: PCT/FR2005/002767
(87) Numéro de publication internationale: WO 2006/051204

(56) Documents cités:
- EP-A- 0 291 649
- US-A- 4 953 825
- US-A1- 2004 113 113
- US-B1- 6 216 673

## Description

La présente invention concerne une vanne utilisable notamment pour réguler le débit d'un fluide dans un circuit de transport de fluide comme par exemple le circuit d'alimentation en carburant d'un moteur thermique de véhicule automobile.

### ARRIERE PLAN DE L'INVENTION

Une telle vanne comporte généralement un corps délimitant un conduit d'entrée et un conduit de sortie d'un fluide et recevant un clapet déplaçable entre une position d'obturation et une position de dégagement du conduit de sortie par un organe d'actionnement fixé à un élément support solidaire du corps. L'organe d'actionnement est par exemple un organe d'actionnement électromagnétique associé à un ressort de rappel du clapet dans sa position d'obturation.

Lorsque le clapet est en position d'obturation, la pression s'exerçant sur le clapet du côté du conduit d'entrée diffère de la pression s'exerçant sur le clapet du côté du conduit de sortie. L'effort résultant de cette différence de pression tend à maintenir le clapet dans sa position d'obturation en s'ajoutant à l'effort de rappel exercé par le ressort. Pour amener le clapet dans sa position de dégagement, l'organe d'actionnement électromagnétique doit donc fournir un effort suffisant pour vaincre l'action conjuguée du ressort et de la différence de pression. Ceci suppose d'avoir un organe électromagnétique dimensionné en conséquence qui présente de ce fait un encombrement relativement important et une consommation élevée en énergie électrique. En outre, l'effort à fournir n'est pas constant et dépend de la différence de pression existant entre les deux faces du clapet.

Pour obvier à cet inconvénient, il est connu d'utiliser des manchons souples en matériau élastomère ayant une extrémité obturée par le clapet et une extrémité opposée reliée à l'élément support de façon à former une chambre. La chambre communique avec le conduit de sortie par une ouverture ménagée dans le clapet de telle manière qu'il règne la même pression dans la chambre et dans le conduit de sortie. Le rappel du clapet en position d'obturation est assuré par un ressort intercalé dans le manchon entre le clapet et l'élément support. Il en résulte que la vanne comporte un nombre de pièces relativement important qui augmente la durée et la complexité du montage. Le montage du manchon et du ressort est, de plus, relativement délicat. En outre, compte tenu de la forme du manchon et des déformations subies par celui-ci, le manchon est réalisé en un élastomère qui, à moins d'être à un coût prohibitif, présente une tenue au carburant limitée. La souplesse du manchon oblige également à prévoir des moyens de guidage du clapet. EP 0291649 décrit une vanne selon le préambule de la revendication 1.

### OBJET DE L'INVENTION

Il serait donc intéressant de disposer d'une vanne présentant une structure simplifiée par rapport aux vannes de l'art antérieur, sans sacrifier l'efficacité.

### BREVE DESCRIPTION DE L'INVENTION

A cet effet, on prévoit une vanne selon l'objet de la revendication 1 comportant en outre un corps qui délimite au moins un conduit d'admission et un conduit de sortie d'un fluide et qui reçoit un clapet déplaçable entre une position d'obturation et une position de dégagement du conduit de sortie par un organe d'actionnement fixé au corps, le clapet ayant une portion centrale solidaire d'une portion centrale d'une membrane sensiblement plane ayant une portion périphérique associée de façon étanche à un élément support solidaire du corps pour définir une chambre avec l'élément support, les portions centrales du clapet et de la membrane étant percées d'une ouverture de communication permanente de la chambre avec le conduit de sortie, la membrane étant élastiquement déformable et dimensionnée pour rappeler le clapet dans sa position d'obturation.

Ainsi, la membrane forme avec l'élément support une chambre à la même pression que le conduit de sortie, ce qui permet de limiter l'effort à exercer sur le clapet pour l'amener dans sa position de dégagement. La forme sensiblement plane de la membrane permet d'avoir une structure compacte de la vanne. En outre, le rappel élastique du clapet dans sa position d'obturation est assuré par la membrane elle-même de sorte qu'il n'est pas nécessaire d'ajouter un ressort dédié à cet effet. Pour assurer ces fonctions, la membrane est relativement raide, ce qui lui permet également d'assurer le guidage du clapet. Un autre avantage de l'utilisation d'une membrane de rappel élastique réside dans le fait que, lors du déplacement du clapet vers sa position de dégagement, l'effort exercé par la membrane croît rapidement et tend à ralentir le clapet à son arrivée en position de dégagement. Ceci permet de limiter le bruit de fonctionnement de la vanne. Pour réaliser une telle membrane, sont utilisés des matériaux relativement raides et notamment des métaux présentant à moindre coût une relativement bonne tenue au carburant.

D'autres caractéristiques et avantages de l'invention ressortiront à la lecture de la description qui suit d'un mode de réalisation particulier non limitatif de l'invention.

### BREVE DESCRIPTION DES DESSINS

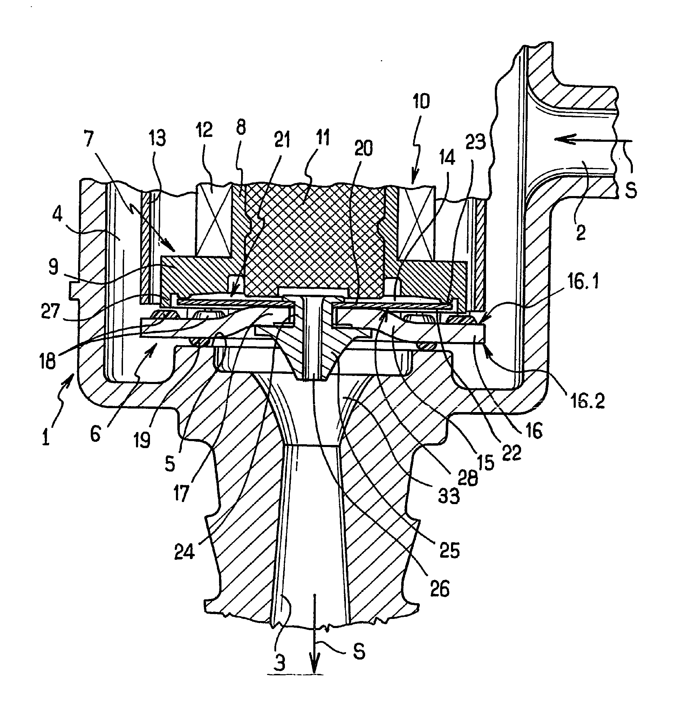

Il sera fait référence à la figure unique annexée, représentant en partie et en coupe une vanne conforme à l'invention.

### DESCRIPTION DETAILLEE DE L'INVENTION

En référence à la figure, la vanne conforme à l'invention comprend un corps généralement désigné en 1, délimitant un conduit d'admission 2 et un conduit de sortie 3 ayant chacun une extrémité débouchant dans un logement 4 du corps 1. Le conduit de sortie 3 est conformé en un tronçon convergent 33 (en référence au sens de circulation du fluide symbolisé par les flèches S) au voisinage de ladite extrémité. Cette extrémité est entourée dans le logement 4 par un siège 5 d'appui d'un clapet généralement désigné en 6 associé, comme cela sera détaillé plus tard, à un élément support généralement désigné en 7 fixé au corps 1 pour s'étendre dans le logement 4 en prolongement du conduit de sortie 3.

L'élément support 7 comprend une partie tubulaire 8 ayant une extrémité, voisine du siège 5, terminée par une collerette 9. L'élément support 7 est réalisé en matériau amagnétique.

Un organe d'actionnement électromagnétique 10, connu en lui-même, est monté sur l'élément support 7. L'organe d'actionnement électromagnétique 10 comprend, de façon connue en soi, un noyau 11 monté dans la partie tubulaire 8 et une bobine 12 montée sur la partie tubulaire 8 et reliée à des moyens d'alimentation en énergie électrique non représentés. En l'espèce, l'élément support 7 est surmoulé sur le noyau 11 tandis que la bobine est réalisée par enroulement d'un conducteur directement sur la partie tubulaire 8. L'organe d'actionnement électromagnétique 10 comprend en outre, de façon connue en elle-même, une cloche 13 de fermeture du champ. Le noyau 11 a une extrémité débouchant de la partie tubulaire 8 dans une chambre 14 qui est ménagée dans la collerette 9 pour déboucher d'une part à l'extérieur de la collerette 9 et d'autre part dans la partie tubulaire 8.

Le clapet 6 comprend une armature rigide, en acier magnétique, formée d'un disque cambré en son centre. L'armature du clapet 6 comporte ainsi une portion périphérique 16 annulaire plane ayant une surface 16.1 en saillie de laquelle s'étend une portion centrale 17 circulaire plane et concentrique à la portion périphérique 16. La portion périphérique 16 et la portion centrale 17 sont reliées l'une à l'autre par une portion tronconique 15.

Des plots amortisseurs 18 en matériau élastomère s'étendent en saillie de la surface 16.1 de la portion périphérique 16. Du côté opposé, la portion périphérique 16 possède une surface 16.2 en saillie de laquelle s'étend un élément d'étanchéité 19 annulaire, par exemple en matériau élastomère, destiné à être appliqué contre le siège 5. Les plots amortisseurs 18 et l'élément d'étanchéité 19 sont ici collés à chaud sur l'armature du clapet 6.

La portion centrale 17 du clapet a une surface convexe appliquée contre la portion centrale 20 d'une membrane généralement désignée en 21 formée d'un disque en un matériau relativement rigide tel qu'un métal comme en acier inoxydable ou un alliage de cuivre...

La membrane 21 est sensiblement plane et a une portion périphérique 22 en appui étanche contre une portée annulaire 23 entourant la chambre 14 de telle manière que la membrane 21 ferme la chambre 14. La portée annulaire 23 est ici formée d'un bourrelet ménageant un appui linéaire à la portion périphérique 22 de la membrane 21. La collerette 9 possède un rebord 27 en saillie de la portée annulaire 23 pour positionner latéralement la membrane 21.

La membrane 21 possède une surface 28 en regard de la surface 16.1 du clapet 16.

Les portions centrales 20, 17 de la membrane 21 et de l'armature du clapet 6 sont réunies ici par un rivet tubulaire 24 délimitant un passage 26. Le rivet 24 est reçu dans une ouverture centrale de la membrane 21 et de l'armature du clapet 6 et assure le centrage réciproque du clapet 6 et de la membrane 21. Le rivet 24 plaque l'une contre l'autre la portion centrale 20 de la membrane 21 et la portion centrale 17 de l'armature du clapet 6.

Le clapet 6 comprend en outre du côté du conduit de sortie 3 une saillie centrale ayant une surface externe de forme complémentaire à celle du tronçon convergent 33. Cette saillie est ici formée d'une extrémité 25 du rivet 24.

La membrane 21 est déformable élastiquement entre un état de repos correspondant sensiblement à une position d'obturation du clapet 6 (représentée à la figure), dans laquelle le clapet 6 est en appui contre le siège 5, et un état déformé correspondant à une position de dégagement dans laquelle le clapet est décollé de son siège 5.

Lorsque le clapet 6 est dans sa position d'obturation, la membrane est légèrement précontrainte pour appliquer le clapet 6 contre le siège 5. En outre, Cette précontrainte permet notamment de compenser une éventuelle dépression de faible ampleur du logement 4. La surface 16.1 de la portion périphérique 16 de l'armature du clapet 6 et la surface 28 de la membrane 21 sont soumises à la pression d'admission tandis que les surfaces opposées à celles-ci de la membrane 21 et du clapet 6 sont soumises à la pression du conduit de sortie 3. Le fluide sous pression, en association à la précontrainte et la raideur de la membrane 21, exerce ainsi, sur la portion périphérique 20 de la membrane 21, un effort tendant à plaquer celle-ci sur la portée annulaire 23 et, sur le clapet 6, un effort tendant à appliquer celui-ci contre son siège 5. On prévoit le rapport des surfaces 16.1 et 28 de telle manière que ces efforts de sens opposés soient équivalents. Ceci permet d'avoir une très bonne étanchéité tant de la chambre que du clapet.

Lorsque le clapet est dans sa position d'obturation, la chambre 14 et le conduit de sortie 3 sont à la même pression, à savoir la pression qui règne dans le conduit de sortie 3 grâce au passage 26 assurant une communication permanente de la chambre 14 avec le conduit de sortie 3.

Le clapet 6 est déplacé dans sa position de dégagement lorsque la bobine 12 est excitée, ce qui provoque la déformation de la membrane 21 vers son état déformé. Cette déformation étant sensiblement symétrique, le clapet 6 est déplacé parallèlement à lui-même. La portion s'étendant entre la portion périphérique 16 et la portion centrale 17 supporte l'essentiel de la déformation de la membrane 21 de sorte que les surfaces en contact du clapet 6 et de la membrane 21 sont constantes lors de la déformation de la membrane 21. Du fait de l'accroissement rapide de l'effort résistant exercé par la membrane 21, les plots amortisseurs 18 arrivent au contact de l'élément support 7 à une vitesse relativement faible. Lorsque le clapet 6 est dans sa position de dégagement, les plots amortisseurs 18 sont en contact avec l'élément support 7 qui forme une butée stoppant le mouvement du clapet 6.

Dans cette position, la saillie 25 en cornet guide les lignes de flux du fluide dans le tronçon convergent 33 du conduit de sortie 3, ce qui permet de limiter les perturbations du fluide à cet endroit et d'augmenter le débit du fluide lorsque la dépression est relativement faible dans le conduit de sortie 3.

Lorsque l'excitation de la bobine 12 cesse, la membrane 21 revient vers son état de repos et ramène ainsi le clapet 6 en position d'obturation. Du fait de la communication de la chambre 14 avec la face opposée du clapet 6, il ne se produit qu'un effet limité d'aspiration du clapet 6, ce qui permet d'avoir un bruit relativement faible à l'arrivée du clapet 6 en appui contre le siège 5.

Bien entendu, l'invention n'est pas limitée au mode de réalisation décrit et on peut y apporter des variantes de réalisation sans sortir du cadre de l'invention tel que défini par les revendications.

En particulier, la portée annulaire peut être plane et il est possible d'intercaler un élément d'étanchéité annulaire entre la portée annulaire et la portion périphérique de la membrane.

En outre, la membrane peut être dimensionnée pour que l'effort nécessaire à son maintien dans son état déformé soit sensiblement égal à celui exercé par l'organe d'actionnement électromagnétique. Il est alors possible de se passer de butée positive supplémentaire pour définir la position de dégagement du clapet 6.

L'organe d'actionnement peut être monté à l'extérieur du corps 1, l'élément support formé alors par exemple par une partie de corps ne servant que d'appui à la portion périphérique de la membrane.

Un matériau plastique ou un matériau composite peut également être utilisé par la membrane.

La membrane et le clapet peuvent être reliés par un moyen de fixation différent d'un rivet et par exemple par collage ou par soudage.

La saillie en cornet du clapet peut être réalisée sur un clapet classique par exemple en une seule pièce avec celui-ci.

Le clapet peut en outre être formé d'un disque dont la portion centrale est surmontée d'un cylindre.

## Revendications

1. Vanne comportant un corps (1) qui délimite au moins un conduit d'admission (2) et un conduit de sortie (3) d'un fluide et qui reçoit un clapet (6) déplaçable entre une position d'obturation et une position de dégagement du conduit de sortie par un organe d'actionnement (10) fixé au corps (1), le clapet ayant une portion centrale (17) solidaire d'une portion centrale (20) d'une membrane (21) sensiblement plane ayant une portion périphérique (22) associée de façon étanche à un élément support (7) solidaire du corps pour définir une chambre avec l'élément support, le clapet et la membrane étant percés d'une ouverture (26) de communication permanente de la chambre avec le conduit de sortie, la membrane étant élastiquement déformable et dimensionnée pour rappeler le clapet dans sa position d'obturation, **caractérisée en ce que** la portion périphérique (20) de la membrane (21) est en appui simple contre l'élément support (7), **en ce que** l'élément support (7) comprend un rebord (27) de positionnement latéral de la membrane, et **en ce que** la membrane (21) et le clapet (6) ont des surfaces en regard destinées à être soumises à une pression du conduit d'ad- mission.

2. Vanne selon la revendication 1, **caractérisée en ce que** les portions centrales (17, 20) sont reliées par un rivet tubulaire (24).

3. Vanne selon la revendication 1, **caractérisée en ce que** le conduit de sortie (3) comprend une portion convergente (33) au voisinage du siège (5) et **en ce que** le clapet (6) comprend du côté du conduit de sortie une saillie (25) ayant une surface extérieure de forme complémentaire au tronçon convergent.

4. Vanne selon la revendication 1, **caractérisée en ce que** le clapet (6) comprend une armature rigide dont la portion centrale (17) est en saillie d'une portion périphérique (16) de l'armature, la portion centrale de l'armature rigide ayant un côté convexe fixé à la portion centrale (20) de la membrane (21), un élément annulaire d'étanchéité (19) étant fixé sur un côté du clapet opposé à la membrane.

5. Vanne selon la revendication 4, **caractérisée en ce que** l'organe d'actionnement (10) est solidaire de l'élément support (7).

## Claims

1. Valve comprising a body (1) that delimits at least one inlet port (2) and one outlet port (3) for a fluid and which accommodates a valve shutter (6) that can be moved by an actuating member (10) fixed to the body (1) between a position in which it shuts off and a position in which it uncovers the outlet port, the valve shutter having a central portion (17) secured to a central portion (20) of a substantially planar diaphragm (21) having a peripheral portion (22) associated in a fluidtight fashion with a support element (7) secured to the body in order with the support element to define a chamber, the valve shutter and the diaphragm being pierced with an opening (26) providing a permanent communication between the chamber and the outlet port, the diaphragm being elastically deformable and engineered to return the valve shutter to its shutoff position, **characterized in that** the peripheral portion (20) of the diaphragm (21) simply rests against the support element (7), **in that** the support element (7) comprises a rim (27) for laterally positioning the diaphragm, and **in that** the diaphragm (21) and the valve shutter (6) have facing surfaces that are intended to be subjected to a pressure from the inlet port.

2. Valve according to Claim 1, **characterized in that** the central portions (17, 20) are connected by a tubular rivet (24).

3. Valve according to Claim 1, **characterized in that** the outlet port (3) comprises a convergent portion (33) near the seat (5), and **in that** the valve shutter (6) comprises, on the outlet port side, a projection (25) the exterior surface of which is of a shape that complements that of the convergent section.

4. Valve according to Claim 1, **characterized in that** the valve shutter (6) comprises a rigid reinforcement of which the central portion (17) projects from a peripheral portion (16) of the reinforcement, the central portion of the rigid reinforcement having a convex side fixed to the central portion (20) of the diaphragm (21), an annular sealing element (19) being fixed to an opposite side of the valve shutter to the diaphragm.

5. Valve according to Claim 4, **characterized in that** the actuating member (10) is secured to the support element (7).

## Patentansprüche

1. Ventil, das einen Körper (1) umfasst, der wenigstens eine Einlassleitung (2) und eine Ausgangsleitung (3) für ein Fluid begrenzt und eine Ventilklappe (6) aufnimmt, die zwischen einer geschlossenen Stellung und einer freigegebenen Stellung der Ausgangsleitung durch ein am Körper (1) befestigtes Betätigungsorgan (10) verlagerbar ist, wobei die Ventilklappe einen Mittelabschnitt (17) aufweist, der mit einem Mittelabschnitt (20) einer im Wesentlichen ebenen Membran (21) fest verbunden ist, die einen Umfangsabschnitt (22) besitzt, der einem mit dem Körper fest verbundenen Halteelement (7) dicht zugeordnet ist, um mit dem Halteelement eine Kammer zu definieren, wobei durch die Ventilklappe und die Membran eine Öffnung (26) für die ständige Kommunikation zwischen der Kammer und der Ausgangsleitung verläuft, wobei die Membran elastisch verformbar ist und so bemessen ist, dass sie die Ventilklappe in ihre Schließstellung zurückstellt, **dadurch gekennzeichnet, dass** der Umfangsabschnitt (20) der Membran (21) einfach an dem Halteelement (7) anliegt, dass das Halteelement (7) einen Rand (27) für die seitliche Positionierung der Membran aufweist und dass die Membran (21) und die Ventilklappe (6) gegenüberliegende Oberflächen besitzen, die dazu bestimmt sind, einem Druck der Einlassleitung unterworfen zu werden.

2. Ventil nach Anspruch 1, **dadurch gekennzeichnet, dass** die Mittelabschnitte (17, 20) durch einen rohrförmigen Niet (24) verbunden sind.

3. Ventil nach Anspruch 1, **dadurch gekennzeichnet, dass** die Ausgangsleitung (3) einen in der Umgebung des Sitzes (5) konvergenten Abschnitt (33) aufweist und dass die Ventilklappe (6) auf Seiten der Auslassleitung einen Vorsprung (25) aufweist, der eine äußere Oberfläche mit einer zu dem konvergenten Teilstück komplementären Form besitzt.

4. Ventil nach Anspruch 1, **dadurch gekennzeichnet, dass** die Ventilklappe (6) einen starren Beschlag aufweist, dessen Mittelabschnitt (17) von einem Umfangsabschnitt (16) des Beschlags vorsteht, wobei der Mittelabschnitt des starren Beschlags eine am Mittelabschnitt (20) der Membran (21) befestigte konvexe Seite besitzt, wobei ein ringförmiges Dichtungselement (19) auf einer Seite der Ventilklappe gegenüber der Membran befestigt ist.

5. Ventil nach Anspruch 4, **dadurch gekennzeichnet, dass** das Betätigungsorgan (10) mit dem Halteelement (7) fest verbunden ist.
